# EUROPEAN PATENT APPLICATION

(11) **EP 4 406 722 A1**
(43) Date of publication of application: **31.07.2024**
(21) Application number: 22872860.6
(22) Date of filing: 16.09.2022
(51) Int. Cl.: B29C 49/20, B29C 45/00, B29C 45/14, B65D 25/20

(54) **CONTAINER MANUFACTURING METHOD**

(30) Priority: 24.09.2021 JP 2021155705
(71) Applicant: Sato Holdings Kabushiki Kaisha, Tokyo 108-0023 (JP)
(72) Inventor: NITTA, Shinya, Tokyo 108-0023 (JP)
(74) Representative: Grünecker Patent- und Rechtsanwälte PartG mbB
(86) International application number: PCT/JP2022/034858
(87) International publication number: WO 2023/048106

(57) **Abstract**

A container manufacturing method includes an RFID inlay disposing step of disposing an RFID inlay provided with a thermoplastic adhesive on an inner surface of a mold with the thermoplastic adhesive exposed, and a molding step of supplying a heated material to the mold and molding a container provided with the RFID inlay on an outer surface thereof via the thermoplastic adhesive.

## Description

### TECHNICAL FIELD

The present invention relates to a container manufacturing method.

### BACKGROUND ART

JP 2009-73518 A discloses an in-mold molding technique that integrally molds an IC tag entirely covered with resin on a wall surface of a container by inserting the IC tag into an inner wall of a blow molding device.

### SUMMARY OF INVENTION

In the technique described above, the IC tag, that is, a radio frequency identification (RFID) inlay is entirely covered with resin. Therefore, when the container and the covered resin integrated with the container contract after molding, strain is likely to concentrate on components of the RFID inlay having a coefficient of thermal expansion different from that of the resin. As a result, for example, an RFID antenna made of metal may be damaged or deformed, which may cause the performance of the RFID inlay to deteriorate.

The present invention has been made in view of the above technical problems, and an object of the present invention is to make it possible to manufacture a container provided with an RFID inlay by in-mold molding while reducing the influence on the performance of the RFID inlay.

According to one aspect of the present invention, a container manufacturing method includes an RFID inlay disposing step of disposing an RFID inlay provided with a thermoplastic adhesive on an inner surface of a mold with the thermoplastic adhesive exposed, and a molding step of supplying a heated material to the mold and molding a container provided with the RFID inlay on an outer surface thereof via the thermoplastic adhesive.

According to the above aspect, the RFID inlay and a material of the container are adhered by the thermoplastic adhesive in contact with the heated material. After the molding of the container, a surface of the RFID inlay that is not adhered to the material of the container is open to the outside. Therefore, the concentration of strain on the RFID inlay when the container contracts is reduced. Therefore, it is possible to manufacture a container provided with an RFID inlay by in-mold molding while reducing the influence on the performance of the RFID inlay.

### BRIEF DESCRIPTION OF DRAWINGS

[FIG. 1] FIG. 1 is an external view of a container manufactured by a container manufacturing method according to an embodiment of the present invention.
[FIG. 2] FIG. 2 is a partial cross-sectional view partially showing a cross section taken along line II-II of FIG. 1.
[FIG. 3] FIG. 3 is a diagram illustrating an adhesive disposing step.
[FIG. 4] FIG. 4 is a diagram illustrating an RFID inlay cutting step.
[FIG. 5] FIG. 5 is a diagram illustrating an RFID inlay disposing step.
[FIG. 6] FIG. 6 is a diagram illustrating a first step in a molding step.
[FIG. 7] FIG. 7 is a diagram illustrating a second step in the molding step.
[FIG. 8] FIG. 8 is a diagram illustrating a third step in the molding step.

### DESCRIPTION OF EMBODIMENTS

Hereinafter, a container manufacturing method and a container 100 manufactured using the container manufacturing method according to an embodiment of the present invention will be described with reference to the accompanying drawings.

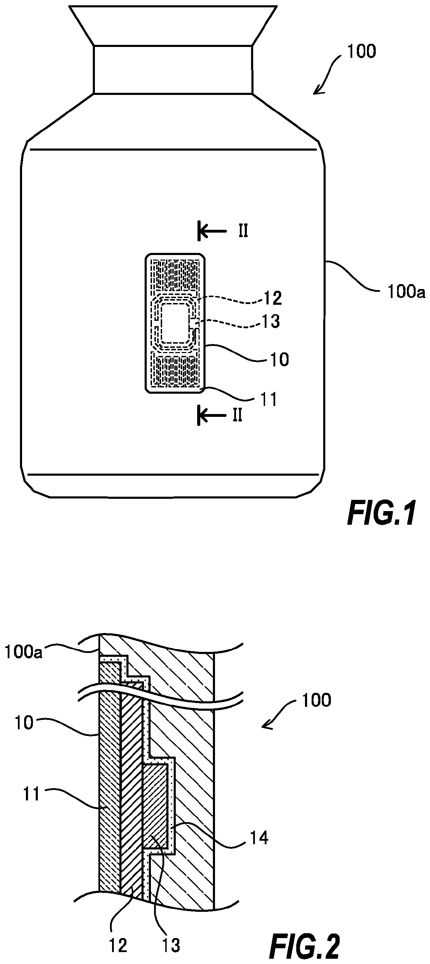

First, the container 100 will be described with reference to FIGS. 1 and 2.

FIG. 1 is an external view of the container 100. FIG. 2 is a partial cross-sectional view partially showing a cross-section taken along line II-II of FIG. 1.

The container 100 is used for, for example, blood collection or a specimen test. A shape of the container 100 is not limited to the shape shown in FIG. 1 and may be, for example, a test tube shape.

In the present embodiment, the container 100 is made of resin. As a material for the container 100, for example, polypropylene, polyethylene, and polyethylene terephthalate can be used.

As shown in FIGS. 1 and 2, the container 100 includes a radio frequency identification (RFID) inlay 10. In the container 100, the RFID inlay 10 can be used to manage the container 100 itself and contents therein.

The RFID inlay 10 includes a substrate 11, an RFID antenna 12 provided on the substrate 11, and an IC chip 13 connected to the RFID antenna 12, and information is read from/written to the IC chip 13 through non-contact communication with a reader/writer.

The RFID inlay 10 is adhered to the material of the container 100 with a thermoplastic adhesive 14 so that the substrate 11 is exposed to the outside on an outer surface 100a of the container 100. As shown in FIG. 2, the container 100 is formed such that the outer surface 100a is flush with the substrate 11 of the RFID inlay 10.

As the thermoplastic adhesive 14, it is preferable to adopt an adhesive that is a solid substance that melts by heat or the like and hardens when cooled, and can chemically bond or mutually diffuse bond the material of the container 100, the substrate 11, and the RFID antenna 12 made of metal. Specifically, for example, a thermoplastic polyurethane adhesive and a thermoplastic polyester adhesive can be used.

In the present embodiment, the substrate 11 is a substrate made of paper (hereinafter, referred to as a paper substrate). As the paper substrate, high-quality paper, medium-quality paper, or coated paper formed using the high-quality paper and the medium-quality paper can be used.

As the substrate 11, in addition to the paper substrate, a single resin film such as polyvinyl chloride, polyethylene terephthalate, polypropylene, polyethylene, or polyethylene naphthalate, or a multilayer film formed by laminating a plurality of these resin films can be used.

In a case where the paper substrate is used as the substrate 11, when the IC chip 13 is mounted on the RFID antenna 12 formed on the substrate 11 using an anisotropic conductive material, the adhesive strength between the IC chip 13 and the substrate 11 can be increased.

The RFID antenna 12 constitutes a dipole antenna.

In the present embodiment, the RFID antenna 12 is designed to have an antenna length and an antenna line width that support a UHF band (300 MHz to 3 GHz, particularly 860 MHz to 960 MHz).

The RFID antenna 12 may be designed to support an HF band (3 MHz to 30 MHz, particularly around 13.56 MHz). When the RFID antenna 12 supports the HF band, antenna patterns may be disposed on both surfaces of the substrate 11.

The RFID antenna 12 is adhered to the substrate 11 with a binder such as an acrylic binder, a urethane binder, a silicone binder, or a rubber binder.

The RFID antenna 12 is formed of metal foil. Examples of the metal applicable to the RFID antenna 12 include copper and aluminum. From the viewpoint of reducing manufacturing costs, it is preferable to use aluminum foil.

From the viewpoint of a thickness of the entire RFID inlay 10, the manufacturing costs, and the like, a thickness of the metal foil is preferably 3 pm or more and 25 pm or less.

The RFID antenna 12 may be formed by applying a paste containing metal powder, or may be formed by printing a conductive material using inkjet.

The IC chip 13 is a semi-conductor package designed to be able to communicate with the reader/writer. In the present embodiment, the IC chip 13 supports the UHF band. The IC chip 13 may be designed to support the HF band together with the RFID antenna 12.

The IC chip 13 is electrically and mechanically connected to the RFID antenna 12 with the anisotropic conductive material such as an anisotropic conductive adhesive or an anisotropic conductive film.

In the anisotropic conductive material, a conductive filler prepared with a predetermined particle size is mixed in binder resin as an adhesive component. The anisotropic conductive material can electrically and mechanically connect the RFID antenna 12 and the IC chip 13 by processing such as thermocompression bonding or ultraviolet curing.

As described above, when the container 100 is used for blood collection or the like, radio waves in the UHF band are attenuated or become unstable when glass or moisture intervenes. Therefore, as the RFID inlay 10, it is preferable to use a moisture-resistant inlay capable of ensuring communication characteristics even when a liquid is contained in the container 100. As the moisture-resistant inlay, existing products available on the market may be used.

When the container 100 is used for medical applications such as blood collection, it is preferable to use a sterilizable inlay as the RFID inlay 10. As the sterilizable inlay, existing products available on the market may be used.

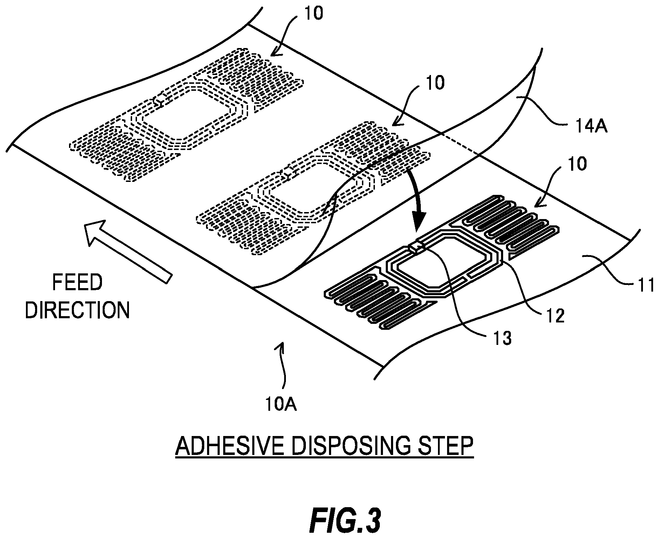

Next, a container manufacturing method for manufacturing the container 100 will be described with reference to FIGS. 3 to 8.

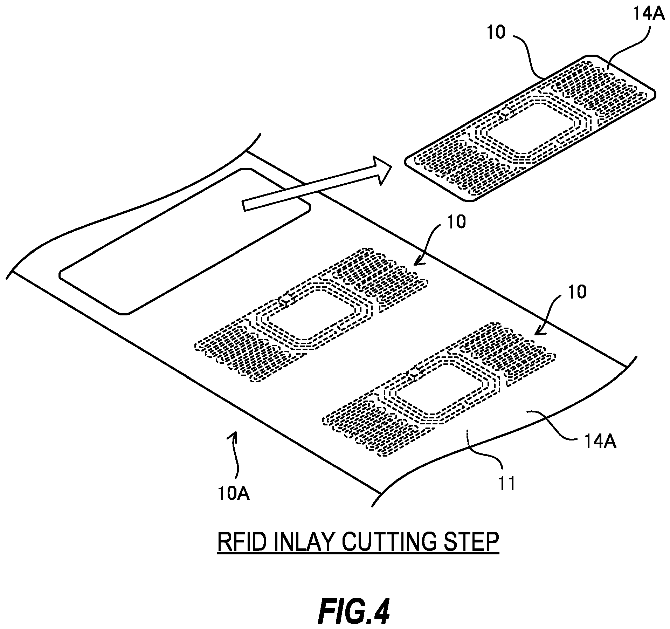

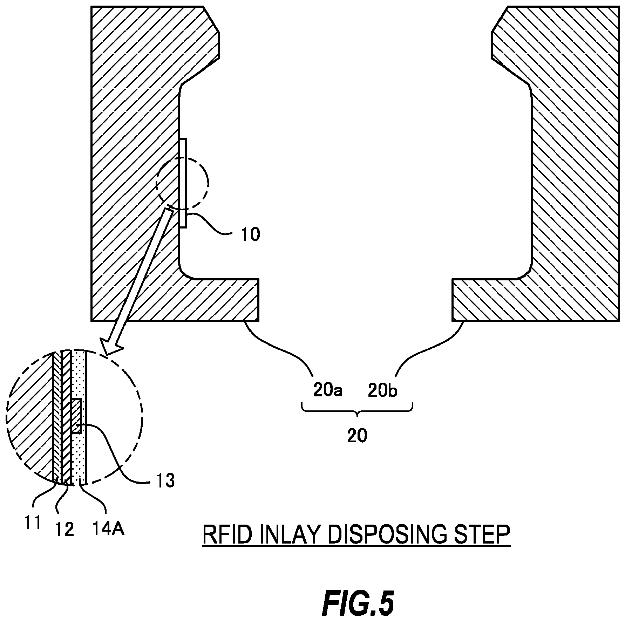

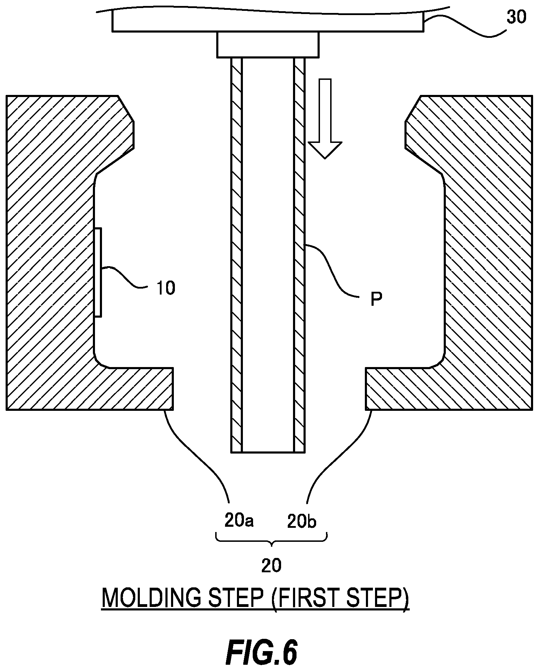

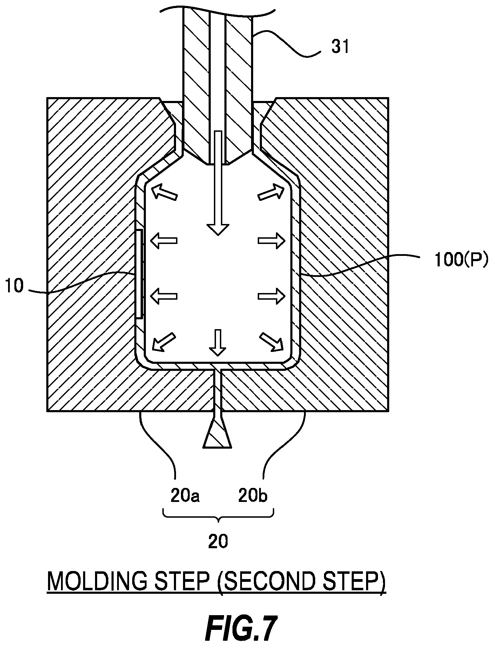

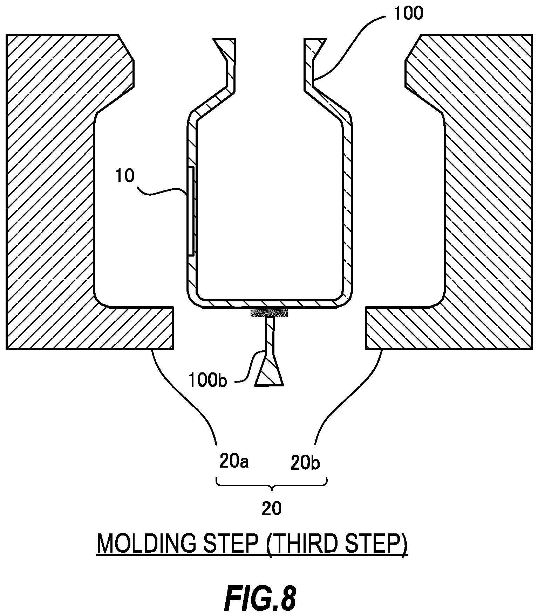

FIG. 3 is a diagram illustrating an adhesive disposing step. FIG. 4 is a diagram illustrating an RFID inlay cutting step. FIG. 5 is a diagram illustrating an RFID inlay disposing step. FIG. 6 is a diagram illustrating a first step in a molding step. FIG. 7 is a diagram illustrating a second step in the molding step. FIG. 8 is a diagram illustrating a third step in the molding step.

First, the adhesive disposing step will be described with reference to FIG. 3.

As shown in FIG. 3, the adhesive disposing step is a step of laminating an elongated film 14A formed of the thermoplastic adhesive 14 on an RFID inlay continuous body 10A in which a plurality of RFID inlays 10 are connected while feeding the RFID inlay continuous body 10A and the film 14A.

In the present embodiment, the film 14A is provided on a surface of the RFID inlay 10 on which the IC chip 13 is disposed.

The film 14A is temporarily attached to the RFID inlay continuous body 10A by being pressurized by a pressure device (not shown) such as a pressure roller while being laminated on the RFID inlay continuous body 10A. The film 14A may be temporarily attached to the RFID inlay continuous body 10A using an adhesive or a binder, or may be temporarily attached using induction heating using molding pressure, high frequency, and the like in addition to pressurization.

As described above, in the present embodiment, since the film 14A is laminated on the RFID inlay continuous body 10A, the RFID inlay continuous body 10A can be stored in a roll shape before and after the adhesive disposing step. Therefore, the degree of freedom in step design is increased, and the management of the RFID inlay continuous body 10A is also facilitated.

The adhesive disposing step may be a step of applying the liquid thermoplastic adhesive 14 to the RFID inlay continuous body 10A.

Next, the RFID inlay cutting step will be described with reference to FIG. 4.

As shown in FIG. 4, the RFID inlay cutting step is a step of cutting out a single RFID inlay 10 from the RFID inlay continuous body 10A on which the film 14A is laminated.

The order of the adhesive disposing step and the RFID inlay cutting step may be switched. That is, a single RFID inlay 10 may be cut out from the RFID inlay continuous body 10A, and then the thermoplastic adhesive 14 may be applied to the single RFID inlay 10.

Next, the RFID inlay disposing step will be described with reference to FIG. 5.

As shown in FIG. 5, the RFID inlay disposing step is a step of disposing the RFID inlay 10 on an inner surface of a mold 20 for molding the container 100.

In the present embodiment, a case where the container 100 is molded by blow molding will be described. Therefore, the mold 20 shown in FIGS. 5 to 8 is configured to compatible with blow molding. However, the container 100 may be molded by injection molding.

In the present embodiment, the mold 20 is a metal mold. However, the mold 20 may not be made of metal as long as the mold 20 can form the container 100.

The mold 20 includes a first mold 20a and a second mold 20b. In FIG. 5, the RFID inlay 10 is disposed on an inner surface of the first mold 20a. However, the RFID inlay 10 may be disposed on an inner surface of the second mold 20b.

As a method for disposing the RFID inlay 10 on the inner surface of the mold 20, for example, it is possible to adhere the RFID inlay 10 to the inner surface of the mold 20 with a temporary adhesive. In addition, the mold 20 may be provided with a hole for venting air, and the RFID inlay 10 may be disposed on the inner surface of the mold 20 using a vacuum effect.

As shown in a partially enlarged view in FIG. 5, the RFID inlay 10 is disposed on the inner surface of the mold 20 with the film 14A exposed. That is, a surface of the RFID inlay 10 on which the IC chip 13 is disposed is positioned closer to an inner space of the mold 20, and a flat surface of the RFID inlay 10 on which components are not disposed is positioned closer to the inner surface of the mold 20. Thus, the RFID inlay 10 can be stably disposed on the inner surface of the mold 20.

Next, the molding step will be described with reference to FIGS. 6 to 8.

The molding step is a step of molding the container 100 using the mold 20, and includes a first step shown in FIG. 6, a second step shown in FIG. 7, and a third step shown in FIG. 8.

In the first step, as shown in FIG. 6, a parison P, which is a heated and melted cylindrical material, is supplied from a head 30 to the mold 20.

In the second step, the first mold 20a and the second mold 20b are brought into close contact with each other, and high-pressure air is blown into the parison P from a blow pin 31 inserted into the parison P.

Thus, the parison P expands due to the internal pressure and is pressed against the inner surface of the mold 20 and molded into the shape of the container 100.

At this time, the film 14A formed of the thermoplastic adhesive 14 melts when the high-temperature material comes into contact with the RFID inlay 10 disposed on the inner surface of the mold 20. Thus, the RFID inlay 10 and the material of the container 100 are adhered.

Since the components of the RFID inlay 10 and the material of the container 100 are different materials, the RFID inlay 10 is easily peeled off from the container 100 simply by molding the RFID inlay 10 integrally with the heated material.

In the present embodiment, by using the thermoplastic adhesive 14, it is possible to ensure the adhesive strength between the components of the RFID inlay 10, in particular, the RFID antenna 12 made of metal and the material (resin) of the container 100.

The thermoplastic adhesive 14 has a melting point lower than that of the material of the container 100 so as to melt by the heat transferred from the material. For example, when the material of the container 100 is polypropylene, since polypropylene has a melting point of 160°C to 170°C, the melting point of the thermoplastic adhesive 14 is preferably lower than 160°C. For example, when the material of the container 100 is polyethylene, since polypropylene has a melting point of 120°C to 140°C, the melting point of the thermoplastic adhesive 14 is preferably lower than 120°C.

In blow molding, the temperature of the material of the container 100 when the container 100 is in contact with the RFID inlay 10 is lower than the melting point and higher than a softening point. Therefore, when the container 100 is molded by blow molding, the melting point of the thermoplastic adhesive 14 is preferably lower than the softening point of the material of the container 100. Thus, the thermoplastic adhesive 14 can be melted more reliably.

Since the mold 20 is normally cooled, when the material of the container 100 comes into contact with the mold 20, the temperature of the material rapidly decreases. Therefore, in order to more reliably transfer the heat of the material to the thermoplastic adhesive 14, the substrate 11 of the RFID inlay 10 is preferably a paper substrate having a lower thermal conductivity than resin or the like. Accordingly, the heat transferred from the material to the thermoplastic adhesive 14 can be prevented from being further transferred from the substrate 11 to the mold 20. That is, since the substrate 11 can function as a heat-insulating material, the thermoplastic adhesive 14 can be more easily melted.

When the parison P is pressed against the mold 20 by the high-pressure air, the RFID inlay 10 is also pressed against the mold 20 via the parison P. In contrast, in the present embodiment, the RFID inlay 10 is disposed in the mold 20 such that the surface on which the IC chip 13 is disposed is positioned closer to the inner space of the mold 20.

Accordingly, when the container 100 is molded, the IC chip 13 only comes into contact with the heated and softened material (parison P). Therefore, it is possible to prevent the IC chip 13 from being damaged by a strong force applied thereto when the container 100 is molded.

When the film 14A is laminated on the RFID inlay 10, the film 14A may be prevented from being laminated on the IC chip 13 by, for example, cutting out a portion corresponding to the IC chip 13. This can further reduce the force applied to the IC chip 13 when the container 100 is molded.

In the third step, the first mold 20a and the second mold 20b are separated, the container 100 is taken out from the mold 20, and an unnecessary gate portion 100b is cut off. Thus, the container 100 provided with the RFID inlay 10 is completed.

The container 100 after molding cools and contracts. Since the components of the RFID inlay 10 and the material of the container 100 have different coefficients of thermal expansion, if the adhesive strength between the material of the container 100 and the components of the RFID inlay 10 is insufficient, the components of the RFID inlay 10 may be peeled off from the material due to the strain generated when the container 100 contracts.

In contrast, in the present embodiment, as described above, by using the thermoplastic adhesive 14, it is possible to ensure the adhesive strength between the components of the RFID inlay 10, in particular, the RFID antenna 12 made of metal and the material of the container 100.

In the present embodiment, the RFID inlay 10 is disposed on the inner surface of the mold 20. Therefore, even if the RFID inlay 10 is integrally molded with the container 100, the surface of the RFID inlay 10 that is not adhered to the material of the container 100 is open to the outside. Thus, the concentration of strain on the RFID inlay 10 when the container 100 contracts is reduced. Therefore, it is possible to prevent the components of the RFID inlay 10 from being damaged or deformed.

In addition, by disposing the RFID inlay 10 on the inner surface of the mold 20, the outer surface 100a of the container 100 is flush with the substrate 11 of the RFID inlay 10, as described above. Thus, when the container 100 is handled, the RFID inlay 10 can be prevented from being caught and peeled off or being damaged.

Hereinafter, functions and effects of the container manufacturing method according to the present embodiment will be collectively described.

The container manufacturing method includes the RFID inlay disposing step of disposing the RFID inlay 10 provided with the thermoplastic adhesive 14 on the inner surface of the mold 20 with the thermoplastic adhesive 14 exposed, and the molding step of supplying the heated material to the mold 20 and molding the container 100 provided with the RFID inlay 10 on the outer surface 100a via the thermoplastic adhesive 14.

Accordingly, the RFID inlay 10 and the material of the container 100 are adhered by the thermoplastic adhesive 14 in contact with the heated material. After the container 100 is molded, the surface of the RFID inlay 10 that is not adhered to the material of the container 100 is open to the outside. Therefore, the concentration of strain on the RFID inlay 10 when the container 100 contracts is reduced. Therefore, it is possible to manufacture the container 100 provided with the RFID inlay 10 by the in-mold molding while reducing the influence on the performance of the RFID inlay 10.

The thermoplastic adhesive 14 is provided on the surface of the RFID inlay 10 on which the IC chip 13 is disposed.

Accordingly, the RFID inlay 10 is disposed in the mold 20 such that the surface on which the IC chip 13 is disposed is positioned closer to the inner space of the mold 20. Therefore, when the container 100 is molded, the IC chip 13 only comes into contact with the heated and softened material. Therefore, it is possible to prevent the IC chip 13 from being damaged by a strong force applied thereto when the container 100 is molded.

The melting point of the thermoplastic adhesive 14 is lower than the melting point of the material of the container 100.

Accordingly, the thermoplastic adhesive 14 melts when the high-temperature material comes into contact with the RFID inlay 10 disposed on the inner surface of the mold 20. Thus, the RFID inlay 10 and the material of the container 100 are adhered. Therefore, it is not necessary to separately provide a step of melting the thermoplastic adhesive 14.

The melting point of the thermoplastic adhesive 14 is lower than the softening point of the material of the container 100.

Accordingly, when the container 100 is molded by blow molding, the thermoplastic adhesive 14 can be melted more reliably.

The RFID inlay 10 includes the substrate 11 made of paper, the RFID antenna 12 provided on the substrate 11, and the IC chip 13.

Accordingly, since the substrate 11 can function as a heat-insulating material, the thermoplastic adhesive 14 can be more easily melted.

The RFID antenna 12 is made of metal, and the container 100 is made of resin.

As described above, even when the RFID antenna 12 and the container 100 are made of different materials, the adhesive strength can be secured by using the thermoplastic adhesive 14.

The container manufacturing method includes, prior to the RFID inlay disposing step, the adhesive disposing step of laminating the film 14A formed of the thermoplastic adhesive 14 on the RFID inlay continuous body 10A in which the RFID inlays 10 are connected.

Accordingly, the RFID inlay continuous body 10A can be stored in a roll shape before and after the adhesive disposing step. Therefore, the degree of freedom in step design is increased, and the management of the RFID inlay continuous body 10A is also facilitated.

In the molding step, the container 100 can be molded by blow molding.

Accordingly, blow molding can be used for the container 100 which is suitable for molding by blow molding.

In the molding step, the container 100 can be molded by injection molding.

Accordingly, injection molding can be used for the container 100 which is suitable for molding by injection molding.

While an embodiment of the invention has been described, the embodiment is merely one of application examples of the invention, and does not intend to limit a technical scope of the invention to a specific configuration according to the embodiment.

For example, in the above embodiment, the case where the material of the container 100 is resin has been described. However, the material of the container 100 may be glass. When the material of the container 100 is glass, the container 100 is molded by blow molding in the molding step.

In the above embodiment, the case where the thermoplastic adhesive 14 is provided on the surface of the RFID inlay 10 on which the IC chip 13 is disposed has been described. However, the thermoplastic adhesive 14 may be provided on the surface of the RFID inlay 10 opposite to the surface on which the IC chip 13 is disposed. In this case, in the RFID inlay disposing step, the RFID inlay 10 is disposed in the mold 20 such that the surface on which the IC chip 13 is disposed faces the inner surface of the mold 20. The thermoplastic adhesive 14 may be provided on both surfaces of the RFID inlay 10. In this case, the RFID inlay 10 may be disposed on the inner surface of the mold 20 with either surface facing the inner surface of the mold 20.

The present application makes a priority claim based on Japanese Patent Application No. 2021-155705 filed in the Japan Patent Office on September 24, 2021, and the entire disclosure of this application is incorporated herein by reference.

## Claims

1. A container manufacturing method comprising:
an RFID inlay disposing step of disposing an RFID inlay provided with a thermoplastic adhesive on an inner surface of a mold with the thermoplastic adhesive exposed; and
a molding step of supplying a heated material to the mold and molding a container provided with the RFID inlay on an outer surface thereof via the thermoplastic adhesive.

2. The container manufacturing method according to claim 1, wherein
the thermoplastic adhesive is provided on a surface of the RFID inlay on which an IC chip is disposed.

3. The container manufacturing method according to claim 1 or 2, wherein
a melting point of the thermoplastic adhesive is lower than a melting point of the material.

4. The container manufacturing method according to claim 1 or 2, wherein
a melting point of the thermoplastic adhesive is lower than a softening point of the material.

5. The container manufacturing method according to claim 2, wherein
the RFID inlay includes a substrate made of paper, an RFID antenna provided on the substrate, and the IC chip.

6. The container manufacturing method according to claim 5, wherein
the RFID antenna is made of metal, and the container is made of resin.

7. The container manufacturing method according to any one of claims 1 to 6, further comprising:
before the RFID inlay disposing step, an adhesive disposing step of laminating a film formed of the thermoplastic adhesive on an RFID inlay continuous body in which the RFID inlays are connected.

8. The container manufacturing method according to any one of claims 1 to 7, wherein
in the molding step, the container is molded by blow molding.

9. The container manufacturing method according to any one of claims 1 to 7, wherein
in the molding step, the container is molded by injection molding.
